# EUROPÄISCHE PATENTSCHRIFT

(11) **EP 3 379 213 B1**
(45) Veröffentlichungstag und Bekanntmachung des Hinweises auf die Patenterteilung: **18.12.2019**
(21) Anmeldenummer: 18000206.5
(22) Anmeldetag: 02.03.2018
(51) Int. Cl.: G01G 3/14, G01L 1/22

(54) **ANORDNUNG FÜR EINEN DEHNUNGSMESSSTREIFEN**
ASSEMBLY FOR A STRAIN GAUGE
DISPOSITIF POUR UNE JAUGE DE CONTRAINTE

(30) Priorität: 22.03.2017 DE 102017002747
(43) Veröffentlichungstag der Anmeldung: 26.09.2018
(73) Patentinhaber: Bizerba SE & Co. KG, 72336 Balingen (DE)
(72) Erfinder: Jörg, Drissner, D-72336 Balingen (DE); Heide, Herrmann, D-72336 Balingen (DE)
(74) Vertreter: Huber, Meik

(56) Entgegenhaltungen:
- EP-A1- 0 526 855
- EP-A2- 0 261 641
- US-A- 4 655 305

## Beschreibung

Die vorliegende Erfindung betrifft eine Waage mit einer Wägezelle zur Gewichtsbestimmung. Die Wägezelle umfasst eine Dehnungsmessstreifenfolie mit Dehnungsmessstreifen.

Die EP 1 347 278 B1 zeigt eine Wägezelle für eine Waage, die mithilfe von Dehnungsmessstreifen ein Gewicht bestimmt. Die Leiterbahnen sind derart ausgestaltet, dass alle resultierenden Verbindungsleitungen von Knotenpunkten der Messbrücke zu Anschlüssen der Sensoren den gleichen Widerstand aufweisen.

Die DE 198 25 761 C2 zeigt eine Dehnungsmessstreifenfolie die vier Dehnungsmessstreifen umfasst.

Die DE 692 15 814 T2 zeigt ein Layout für eine Dehnungsmessstreifenfolie.

Die EP 0 526 855 A1 zeigt eine Dehnungsmessstreifenfolie, die ein Messsystem aus mehreren Dehnungsmessstreifen umfasst, wobei die Dehnungsmessstreifen mit Kontaktpunkten der Dehnungsmessstreifenfolie verbunden sind und die elektrische Verbindung zwischen den Kontaktpunkten und den Dehnungsmessstreifen für jeden Dehnungsmessstreifen den gleichen Widerstand aufweist.

Aufgabe der Erfindung ist es eine Dehnungsmessstreifenfolie zu verbessern und insbesondere eine Dehnungsmessstreifenfolie zu schaffen, die eine höhere Haltbarkeit und Prozesssicherheit aufweist und somit eine Waage mit einer Wägezelle zur Gewichtsbestimmung, die eine Dehnungsmessstreifenfolie umfasst, zu verbessern.

Diese Aufgabe wird durch eine Dehnungsmessstreifenfolie nach Anspruch 1 und einer Wägezelle nach Anspruch 11 und einer Waage nach Anspruch 14 gelöst.

Erfindungsgemäß wird eine Dehnungsmessstreifenfolie vorgeschlagen. Die Dehnungsmessstreifenfolie besteht aus einem Folienmaterial mit mindestens zwei Dehnungsmessstreifen. Die Dehnungsmessstreifenfolie umfasst einen Kontaktbereich mit Kontaktpunkten. Elektrische Kontaktleitungen verbinden die Kontaktpunkte mit Brückenpunkten einer Messbrücke. Insbesondere handelt es sich bei der Messbrücke um eine Wheatstone'sche Brückenschaltung. Die Dehnungsmessstreifenfolie umfasst elektrische Brückenleitungen, die jeweils einen Brückenpunkt mit einem Dehnungsmessstreifen verbinden. Mindestens eine Brückenleitung weist einen Umkehrpunkt auf. An dem Umkehrpunkt ändert sich die Richtung der Leitung um 180 Grad. Die Kontur des Umkehrpunktes ist rund, das heißt, der Umkehrpunkt weist keine abrupten Richtungswechsel auf wie zum Beispiel bei einer Ecke oder bei einer leicht abgerundeten Ecke. In einer Ausführungsform ist der Umkehrpunkt halbkreisförmig ausgebildet. In einer Ausführungsform ist der Umkehrpunkt elliptisch ausgebildet. Mit anderen Worten besteht ein Umkehrpunkt aus einem erster Teil und einem dritter Teil der Brückenleitung, die parallel angeordnet sind. Die beiden Enden des ersten Teils und des dritten Teiles der der Brückenleitung sind durch einen zweiten Teil der Brückenleitung verbunden, wobei dieser zweite Teil ein Teil ist, der aus einer Halbkreisform, einer halben Ellipse oder einer runden Kontur ausgebildet ist und einen Querschnitt hat, der dem Querschnitt des ersten Teils und des dritten Teils der Brückenleitung entspricht. Insbesondere ist mindestens ein solcher Umkehrpunkt in mindestens einer Brückenleitung vorhanden. In einer Ausführungsform umfasst auch mindestens eine Kontaktleitung einen Umkehrpunkt. In einer Ausführungsform sind die mindestens zwei Dehnungsmessstreifen in einer Brückenschaltung verschaltet, so dass es sich bei zwei Dehnungsmessstreifen um eine Halbbrückenschaltung oder bei vier Dehnungsmessstreifen um eine Vollbrückenschaltung handelt. Im Rahmen dieser Anmeldung ist unter der runden Kontur des Umkehrpunktes ebenfalls eine Form zu verstehen, die im Wesentlichen dieser Form nahe kommt, jedoch zum Beispiel durch den Layoutprozess oder den Fotolithografieprozess Unstetigkeitsstellen aufweist. Diese kommen zum Beispiel durch das Rendering und den Export von Daten aus der Layout Software zustande. Gegebenenfalls müssen bei bestimmten Fotolithographieprozessen runde Formen durch das Aneinanderreihen von Treppenstufen realisiert werden.

Im Schaltungsdesign, insbesondere beim Entwurf von Schaltungen die mittels Fotolithografie hergestellt werden, sind Ecken oft problematisch bei der Produktion und sind insbesondere für die Haltbarkeit der Schaltungen nachteilig, da sich die Metallisierungsebene an den Ecken ablösen kann. Oft wird dieses Problem reduziert, indem Ecken entsprechend gestaltet werden, zum Beispiel durch "abgeschrägte Ecken", sogenannte Chamfered-track-corners. Im Bereich des Design von Dehnungsmessstreifenfolien tritt das Problem der Ecken sogar noch verstärkt auf, da die Dehnungsmesstreifen bei der Nutzung durch die Krafteinwirkung besonderen Spannungen ausgesetzt sind und die Metallisierungsebene dementsprechend beansprucht wird. Dieses Problem kann durch Chamfered-track-corners nicht gelöst werden. Deswegen wird bei dem Entwurf der Dehnungsmessstreifenfolie darauf geachtet, dass die Dimensionen von Leitungen derart sind, dass ein Ablösen an den Ecken vermieden wird und zum Beispiel Ecken nur an Stellen angebracht sind, an denen die Krafteinwirkung eher geringer ist. Dies bringt Einschränkungen im Entwurf mit sich, so dass das Layout der Brückenschaltung aufgrund dessen nicht mehr beliebig gewählt werden kann. Die vorgeschlagenen Umkehrpunkte in runder, elliptischer oder halbkreisförmiger Kontur lösen sich selbst bei Krafteinwirkung nicht von der Dehnungsmessstreifenfolie ab. So können Dehnungsmessstreifenfolien mit höherer Haltbarkeit und mit mehr Prozesssicherheit hergestellt werden. Gleichzeitig kann bei der Nutzung von insbesondere elliptischen oder halbkreisförmigen Umkehrpunkten das Layout der Dehnungsmessstreifenfolie weitestgehend symmetrisch gestaltet werden, was einen erheblichen messtechnischen Vorteil mit sich bringt.

In einer Ausführungsform besteht mindestens eine Brückenleitung aus drei parallel angeordneten Teilstücken. Das mittlere Teilstück ist an einem Ende über einen ersten Umkehrpunkt mit dem ersten Teilstück vorhanden. Das mittlere Teilstück ist am anderen Ende über einen zweiten Umkehrpunkt mit dem dritten Teilstück verbunden. Mit anderen Worten bilden die drei Teilstücke die Form eines S. Die drei Teilstücke können, müssen jedoch nicht gleich lang sein. Insbesondere sind die freien Enden der ersten und dritten Teilstücke mit weiteren Leitungen oder Dehnungsmessstreifen verbunden. In einer Ausführungsform ist der Abstand zwischen dem mittleren Teilstück und dem ersten Teilstück gleich wie der Abstand zwischen dem mittleren Teilstück und dem dritten Teilstück.

In einer Ausführungsform sind zwei Brückenleitungen die den gleichen Brückenpunkt zur Signalmessung mit jeweils einem Dehnungsmesstreifen verbinden symmetrisch ausgebildet. Die Wheatstone'sche Messbrücke umfasst vier Brückenpunkte wovon zwei zur Spannungsversorgung dienen. Die anderen beiden Brückenpunkte sind Brückenpunkte, an denen das gemessene Signal abgegriffen werden kann. Im Rahmen der Anmeldung sind diese beiden Brückenpunkte Brückenpunkte zur Signalmessung. Von einem Brückenpunkt zur Signalmessung gehen zwei Brückenleitungen aus, eine zu einem ersten Dehnungsmessstreifen und eine zu einem zweiten Dehnungsmessstreifen. Diese beiden Brückenleitungen sind symmetrisch ausgebildet. Symmetrisch ausgebildet heißt, dass die Geometrie der Leitung entweder identisch oder spiegelverkehrt ist.

In einer Ausführungsform sind alle Brückenleitungen die Dehnungsmesstreifen mit Brückenpunkten zur Signalmessung verbinden symmetrisch ausgebildet sind. Eine Wheatstone'sche Brückenschaltung umfasst vier Brückenleitungen, die Dehnungsmesstreifen mit den beiden Brückenpunkten zur Signalmessung verbinden.

In einer Ausführungsform bestehen mindestens zwei Brückenleitungen jeweils aus mindestens zwei Leitungsabschnitten. Die Leitungsabschnitte der mindestens zwei Brückenleitungen weisen im Wesentlichen jeweils die gleiche Länge und den gleichen Querschnitts auf. Das heißt, bezogen auf Querschnitt und Länge der Leitungsabschnitte weisen beide Brückenleitungen die gleichen Leitungsabschnitte auf. Erfindungsgemäß umfasst jede der mindestens zwei Brückenleitungen einen Leitungsabschnitt mit einem schmalen Leitungsquerschnitt und einen Leitungsabschnitt mit einem breiten Leitungsquerschnitt. Das hat den Vorteil, dass durch die gleiche Ausbildung der Brückenleitungen, also der Brückenpfade in der Messbrücke, die Messgenauigkeit erhöht wird. Die elektrischen Eigenschaften der Brückenleitungen verfälschen die Messung und werden durch die Brückenschaltung schaltungstechnisch eliminiert. Weisen die beiden Brückenleitungen jedoch nicht die gleichen elektrischen Eigenschaften auf, so ergibt sich ein Messfehler. Die Auslegung der Brückenleitung derart, dass sie den gleichen Widerstand aufweisen, dämmt dieses Problem ein. Jedoch hat sich durch Versuche gezeigt, dass selbst Brückenleitungen die den gleichen Widerstand aufweisen noch Ursache von Messfehlern sein können. Weisen die Leitungen hingegen die gleichen Leitungsabschnitte auf, das heißt, sind die Leitungen gleich gebildet, können diese Messfehler erheblich reduziert werden. In einer Ausführungsform weisen die Leitungsabschnitte der mindestens zwei Brückenleitungen die gleiche Geometrie auf. Das heißt, die Leitungsabschnitte haben sowohl die gleiche Länge, den gleichen Querschnitt und die gleiche Form. Werden Leitungsabschnitte gleicher Geometrie zur Verbindung der Brückenpunkte mit den Dehnungsmessstreifen verwendet, so sind die Leitungen symmetrisch, wodurch der, durch die Brückenleitungen verursachte Messfehler, theoretisch nicht mehr auftritt.

In einer Ausführungsform umfasst die Dehnungsmessstreifenfolie vier Dehnungsmessstreifen und acht Brückenleitungen. Die Brückenleitungen verbinden jeweils einen Brückenpunkt mit einem Dehnungsmessstreifen. Die Brückenleitungen der gleichen Halbbrücke weisen jeweils Leitungsabschnitte von im Wesentlichen gleicher Länge und gleichen Querschnitts auf. Die jeweiligen Halbbrücken können jedoch unterschiedliche Leitungsabschnitte aufweisen.

In einer Ausführungsform weisen alle Brückenleitungen, die jeweils einen Brückenpunkt mit einem Dehnungsmessstreifen verbinden, Leitungsabschnitte von im Wesentlichen gleicher Länge und gleichen Querschnitts auf. Das heißt, die Brückenleitungen sind was Länge und Querschnitt angeht symmetrisch ausgeführt.

In einer Ausführungsform umfassen mindestens zwei Kontaktleitungen jeweils mindestens zwei Leitungsabschnitte. Die mindestens zwei Kontaktleitungen sind aus Leitungsabschnitten von im Wesentlichen gleicher Länge und gleichen Querschnitts aufgebaut.

In einer Ausführungsform bestehen alle Kontaktleitungen aus Leitungsabschnitten von im Wesentlichen gleicher Länge und gleichen Querschnitts.

In einer Ausführungsform bestehen alle Brückenleitungen und alle Kontaktleitungen aus Leitungsabschnitten von im Wesentlichen gleicher Länge und gleichen Querschnitts.

In einer Ausführungsform sind Brückenleitungen und Kontaktleitungen im Bereich der Dehnungsmessstreifen aus Leitungsabschnitten mit schmalem Querschnitt gebildet.

In einer Ausführungsform weist die Gleichheit der Länge und des Querschnitts von Leitungsabschnitten mit schmalem Querschnitt eine geringere Toleranz auf als die Gleichheit der Länge und des Querschnitts von Leitungsabschnitten mit breitem Querschnitt. In anderen Worten, bei Leitungsabschnitten mit einem schmalen Querschnitt ist es wichtiger dass die korrespondierenden Leitungsabschnitte der Brückenleitungen oder der Kontaktleitungen bezüglich Länge und Querschnitt gleich sind als bei Leitungsabschnitten mit breitem Querschnitt. Dies rührt insbesondere aus der Produktion der Dehnungsmessstreifenfolie her, die vorzugsweise mittels Fotolithographie hergestellt wird. Aufgrund der Toleranzen des Fotolithographieprozesses werden Abmessungen gegebenenfalls etwas kleiner als geplant. Insbesondere an der Längsseite der Leitungen spielt das eine Rolle, sodass die Leitungsbreite aufgrund der Prozesstoleranzen etwas schmaler wird. Dabei handelt es sich um einen festen Toleranzwert, der von der Leitungsbreite weitestgehend unabhängig ist. Dieser Toleranzwert fällt bei einer schmalen Leitung stärker ins Gewicht als bei einer breiten Leitung. Aus diesem Grund ist es vorteilhaft, insbesondere bei schmalen Leitungsquerschnitten diese Toleranzen zu beachten.

Erfindungsgemäß wird eine Wägezelle zur Bestimmung einer Gewichtskraft vorgeschlagen. Die Wägezelle umfasst im Bereich einer Schwächungszone eine erfindungsgemäße Dehnungsmessstreifenfolie. Die Wägezelle besteht aus einem Biegebalken oder Parallelogrammlenker. In einer Ausführungsform sind die Brückenleitungen und Kontaktleitungen im Bereich der Schwächungszonen der Wägezelle mit schmalem Querschnitt ausgebildet. Das hat den Vorteil, dass die mechanischen Auswirkungen der Brückenleitungen und der Kontaktleitungen im Bereich der Schwächungszonen geringer sind, wenn sie mit schmalem Querschnitt ausgebildet sind.

In einer Ausführungsform ist die Dehnungsmessstreifenfolie auf der Oberseite der Wägezelle aufgebracht. In einer Ausführungsform ist die Dehnungsmessstreifenfolie auf der Unterseite der Wägezelle aufgebracht. In einer Ausführungsform sind eine Dehnungsmessstreifenfolie auf der Oberseite der Wägezelle und eine Dehnmessstreifenfolie auf der Unterseite der Wägezelle aufgebracht.

Erfindungsgemäß wir eine Waage vorgeschlagen, die eine erfindungsgemäße Wägezelle umfasst. Erfindungsgemäß wird eine Waage vorgeschlagen, die mindestens einen erfindungsgemäßen Dehnungsmessstreifen umfasst.

Einige Ausführungsformen der Erfindung sind in den Zeichnungen beispielhaft gezeigt und nachfolgend beschrieben. Es zeigen, jeweils in schematischer Darstellung:
- Figur 1: eine Ausführungsform der erfindungsgemäßen Dehnungsmessstreifenfolie,
- Figur 2: ein Ersatzschaltbild der erfindungsgemäßen Dehnungsmessstreifenfolie,
- Figur 3: eine schematische Darstellung einer erfindungsgemäßen Dehnungsmessstreifenfolie in einer ersten Ausführungsform,
- Figur 4: eine schematische Darstellung einer erfindungsgemäßen Dehnungsmessstreifenfolie in einer zweiten Ausführungsform,
- Figur 5: zwei Ausschnitte einer erfindungsgemäßen Brückenleitung,
- Figur 6: eine symmetrische Brückenleitung zur Verbindung eines Brückenpunktes zur Signalmessung mit zwei Dehnungsmesstreifen.

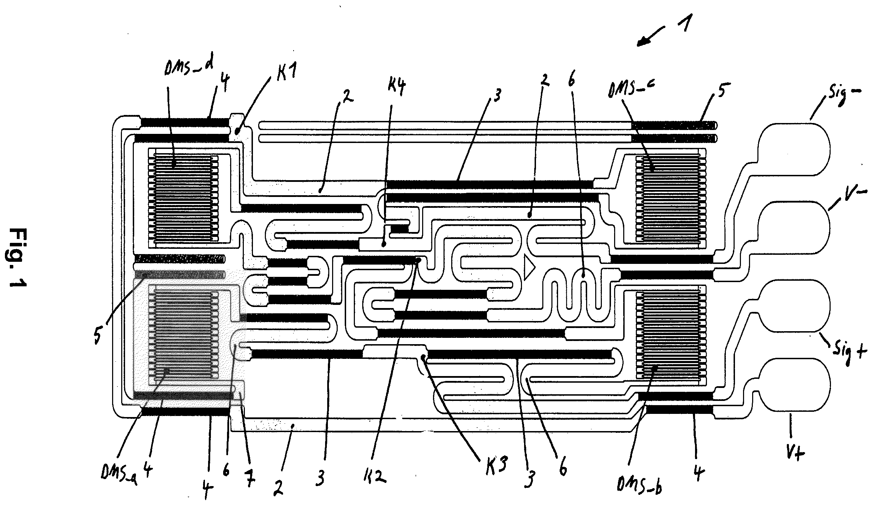

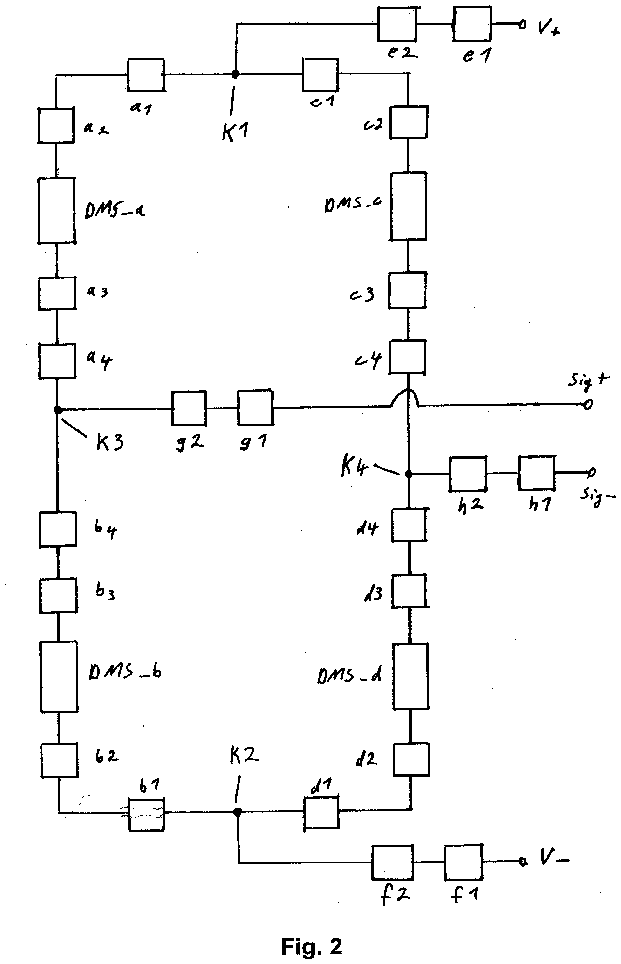

Figur 1 zeigt eine Ausführungsform der erfindungsgemäßen Dehnungsmessstreifenfolie 1. Dabei ist in Figur 1 die Metallisierungsebene der Dehnungsmessstreifenfolie 1 abgebildet. Die übrigen Schichten der Dehnungsmessstreifenfolie 1 sind nicht gezeigt. Die Dehnungsmessstreifenfolie umfasst vier Kontaktpunkte V+, V-, Sig+, Sig-. Die Kontaktpunkte V+, V-, Sig+, Sig- sind mit Brückenpunkten K1, K2, K3, K4 über Kontaktleitungen verbunden. Zwischen den Brückenpunkten K1, K2, K3, K4 sind vier Dehnungsmessstreifen DMS_a, DMS_b, DMS_c, DMS_d verschaltet. Die Schaltung auf der Dehnungsmessstreifenfolie 1 bildet eine Wheatstone'sche Messbrückenschaltung. Die Verschaltung ist mittels Brückenleitungen und Kontaktleitungen wie in Figur 2 im Detail beschrieben realisiert. Die Brückenleitungen und Kontaktleitungen umfassen schmale Leitungsabschnitte 3, 4 und breite Leitungsabschnitte 2. Auf Höhe der Dehnungsmessstreifen DMS_a, DMS_b, DMS_c, DMS_d befinden sich ausschließlich schmale Leitungsabschnitte 4. Die schmalen Leitungsabschnitte 4 verursachen weniger mechanische Störungen als breite Leitungsabschnitte. Um mechanische Symmetrie zu erreichen sind auf Höhe der Dehnungsmessstreifen DMS_a, DMS_b, DMS_c, DMS_d in Bereichen, in denen keine Leitungsabschnitte zur Verschaltung benötigt werden, schmale Blindleitungen 5 angebracht, die den gleichen Querschnitt haben wie schmale Leitungsabschnitte 3, 4. Der Ausdruck schmaler Leitungsabschnitt 3, 4 und breiter Leitungsabschnitt 2 bezieht sich auf den Querschnitt des Leitungsabschnitts. Des Weiteren hat jeder Leitungsabschnitt eine Länge. Das Verhältnis zwischen schmalen Leitungsabschnitten 3, 4 und breiten Leitungsabschnitten 2 und deren Längen bei Brückenleitungen und Kontaktleitungen ist im Zusammenhang mit dem Ersatzschaltbild in Figur 2 beschrieben. Erfindungsgemäß umfasst die Verschaltung Umkehrpunkte 6, die in diesem Ausführungsbeispiel aus breiten Leitungsabschnitten 2 ausgebildet sind. An einem Umkehrpunkt 6 ändert sich die Richtung der Leitung um 180 Grad. Die Kontur des Umkehrpunktes 6 ist halbkreisförmig ausgebildet. Mit anderen Worten ist im Bereich eines Umkehrpunktes 6 ein erster Teil und ein dritter Teil der Brückenleitung oder der Kontaktleitung parallel angeordnet. Die beiden Enden des ersten Teils und des dritten Teiles der Kontaktleitung oder der Brückenleitung sind durch einen zweiten Teil der Kontaktleitung oder der Brückenleitung verbunden, wobei dieser zweite Teil ein Teil ist, der aus einer Halbkreisform ausgebildet ist und einen Querschnitt hat, der dem Querschnitt des ersten Teils und des dritten Teils der Brückenleitung oder Kontaktleitung entspricht. In anderen Ausführungsbeispielen ist der Umkehrpunkt rund oder elliptisch. Ein Umkehrpunkt 6 ist zu unterscheiden von einer geometrischen Richtungsänderung 7 der Leitung, die nicht halbkreisförmig ausgebildet ist, jedoch zum Beispiel als abgerundete Ecke ausgebildet sein kann.

Figur 2 zeigt ein Ersatzschaltbild von einer erfindungsgemäßen Dehnmessstreifenfolie 1. Das Ersatzschaltbild weist nur die für die Erfindung wesentlichen Elemente der Dehnmessstreifenfolie auf und vernachlässigt die für die Erfindung nicht wesentlichen Elemente. Die in Figur 2 gezeigte Schaltung ist eine Wheatstone'sche Messbrückenschaltung wie sie zur Gewichtsbestimmung mittels Dehnungsmessstreifen regelmäßig zur Anwendung kommt. Die Figur zeigt eine Vollbrücke mit vier Dehnungsmessstreifen DMS_a, DMS_b, DMC_c, DMS_d, wobei die Erfindung auch für Halbbrücken zur Anwendung kommen kann. Die Kontaktpunkte V+, V-, Sig+, Sig-, an denen die Dehnungsmessstreifenfolie kontaktiert werden kann, sind jeweils mittels Kontaktleitungen mit Brückenpunkten K1, K2, K3, K4 verbunden. Jeder Brückenpunkt K1, K2, K3, K4 ist über Brückenleitungen mit jeweils zwei Dehnungsmessstreifen DMS_a, DMS_b, DMS_c, DMS_d verbunden. Die Brückenleitungen und Kontaktleitungen werden mittels Fotolithographie aus einer Metallschicht der Dehnungsmessstreifenfolie 1 herausgeätzt. Die Brückenleitungen bestehen jeweils aus mindestens zwei Leitungsabschnitten a1, a2, a3, a4, b1, b2, b3, b4, c1, c2, c3, c4, d1, d2, d3, d4. Die Kontaktleitungen bestehen jeweils aus mindestens zwei Leitungsabschnitten e1, e2, f1, f2, g1, g2, h1, h2. Die Leitungsabschnitte a1, a2, a3, a4, b1, b2, b3, b4, c1, c2, c3, c4, d1, d2, d3, d4, e1, e2, f1, f2, g1, g2, h1, h2 haben eine Länge und einen Querschnitt, wobei der Zusammenhang zwischen Länge und Querschnitt der einzelnen Leitungsabschnitte für Brückenleitungen und Kontaktleitung derart ist, dass ein Messfehler, der durch die Brückenleitungen und Kontaktleitungen entsteht, minimiert oder verhindert wird. Dazu sind die Brückenleitungen so ausgebildet, dass jede Brückenleitung mindestens einen ersten Leitungsabschnitt a1, b1, c1, d1, a4, b4, c4, d4 mit einer ersten Länge und einem ersten Querschnitt aufweist und einen zweiten Leitungsabschnitt a2, b2, c2, d2, a3, b3, c3, d3 mit einer zweiten Länge und einem zweiten Querschnitt aufweist. Das führt zu einem symmetrischen Aufbau der Vollbrücke. In einer Ausführungsform ist der Aufbau derart, dass nur eine Halbbrücke symmetrisch aufgebaut ist, das heißt, dass nur zwei Brückenleitungen einen ersten Leitungsabschnitt mit einer ersten Länge und einem ersten Querschnitt und einen zweiten Leitungsabschnitt mit einer zweiten Länge und einem zweiten Querschnitt aufweisen, wobei die anderen Brückenleitungen andere Längen und andere Querschnitte aufweisen können.

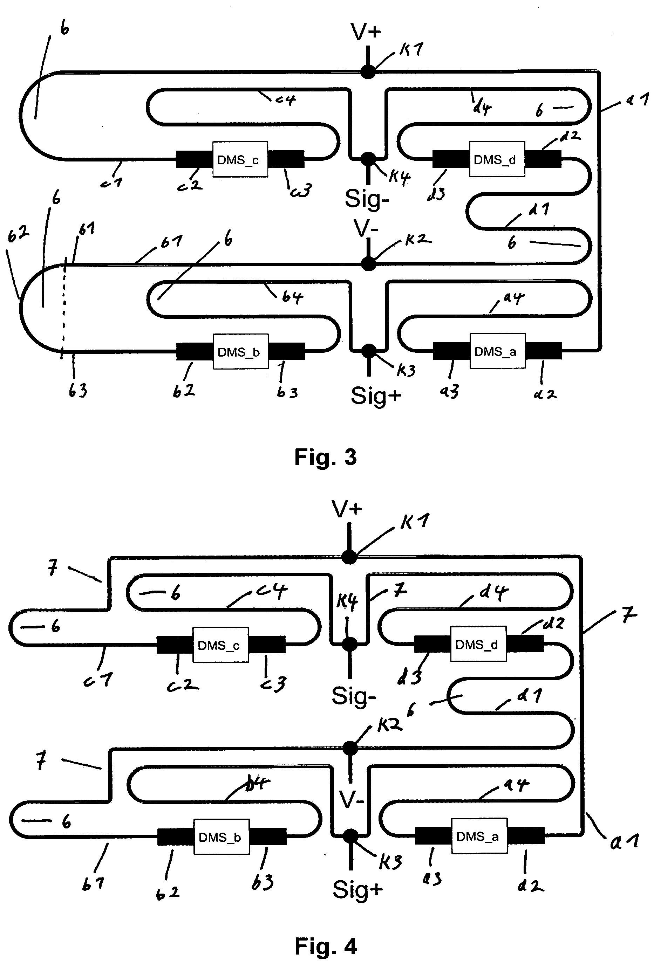

Figur 3 zeigt eine schematische Darstellung der Schaltung einer erfindungsgemäßen Dehnungsmessstreifenfolie 1 in einer ersten Ausführungsform. Die Schaltung zeigt eine Wheatstone'sche Messbrücke. Zur Vereinfachung der Darstellung sind die Kontaktleitungen nicht separat ausgeführt, so dass die Kontaktpunkte V+, V-, Sig+, Sig- direkt an die Brückenpunkte K1, K2, K3, K4 herangeführt sind. Die Dehnungsmessstreifen DMS_a, DMS_b, DMS_c, DMS_d sind jeweils über Brückenleitungen mit den Brückenpunkte K1, K2, K3, K4 verbunden. Jede Brückenleitung besteht aus einem ersten Leitungsabschnitt a1, b1, c1, d1, a4, b4, c4, d4 mit einer ersten Länge und einem ersten Querschnitt und einen zweiten Leitungsabschnitt a2, b2, c2, d2, a3, b3, c3, d3 mit einer zweiten Länge und einem zweiten Querschnitt. Die Leitungsabschnitte a1, b1, c1, d1, a4, b4, c4, d4, a2, b2, c2, d2, a3, b3, c3, d3 können aus mehreren Teilabschnitten aufgebaut sein.

Die Figur zeigt Umkehrpunkte 6, die aus breiten Leitungsabschnitten ausgebildet sind, wie in Figur 1 gezeigt. An einem Umkehrpunkt 6 ändert sich die Richtung der Leitung um 180 Grad. Die Kontur des Umkehrpunktes 6 ist halbkreisförmig ausgebildet. Mit anderen Worten ist im Bereich des Umkehrpunktes 6 ein erster Teil 61 und ein dritter Teil 63 der Brückenleitung parallel angeordnet. Die beiden Enden des ersten Teils 61 und des dritten Teiles 63 der Brückenleitung sind durch einen zweiten Teil 62 der Brückenleitung verbunden, wobei dieser zweite Teil 62 ein Teil ist, der aus einer Halbkreisform ausgebildet ist und einen Querschnitt hat, der dem Querschnitt des ersten Teils und des dritten Teils der Brückenleitung entspricht. In einer Ausführungsform kann der Umkehrpunkt rund oder elliptisch sein. Ein Umkehrpunkt 6 ist zu unterscheiden von einer geometrischen Richtungsänderung 7 der Leitung, die nachfolgend in Figur 4 gezeigt wird.

Figur 4 zeigt eine schematische Darstellung der Schaltung einer erfindungsgemäßen Dehnungsmessstreifenfolie 1 in einer zweiten Ausführungsform. Die Schaltung entspricht im Wesentlichen der von Figur 3. Allerdings sind manche Leitungsabschnitte hier als geometrische Richtungsänderungen 7 ausgebildet, die sich von den Umkehrpunkten 6 dadurch unterscheiden, dass Sie nicht halbkreisförmig ausgebildet sind, sondern lediglich eine abgerundete Ecke haben.

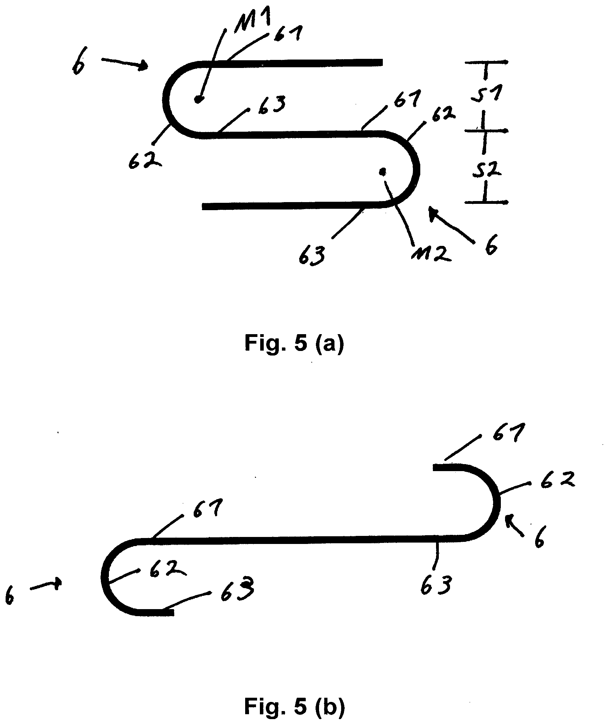

Figur 5 (a) zeigt einen Ausschnitt einer erfindungsgemäßen Brückenleitung. Diese Struktur kann auch für die Realisierung einer Kontaktleitung herangezogen werden. Der Ausschnitt der Brückenleitung zeigt drei parallel angeordnete Teilstücke. Es sind zwei Umkehrpunkte 6 gezeigt, die von jeweils zwei Teilstücken die einander entsprechenden Enden 61, 63 der Teilstücke mit einem Halbkreis 62 verbinden. Die Halbkreise haben jeweils einen Mittelpunkt M1, M2. Das erste parallele Teilstück hat zum mittleren Teilstück den Abstand s1. Das dritte parallele Teilstück hat zum mittleren Teilstück den Abstand s2. Figur 5 (b) zeigt die eine ähnliche Anordnung, allerdings sind die parallelen Teilstücke nicht gleich lang.

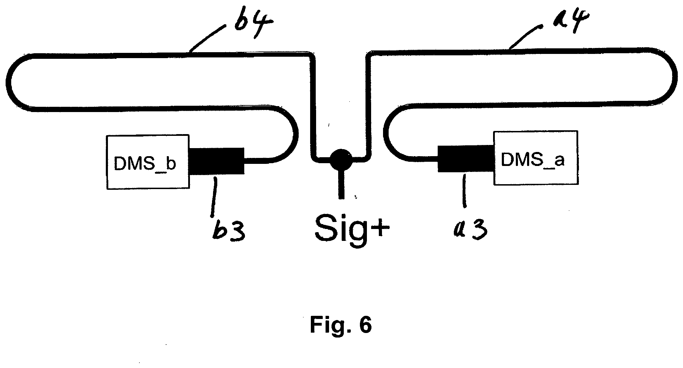

Figur 6 zeigt eine symmetrische Brückenleitung a3, a4, b3, b4 zur Verbindung eines Brückenpunktes Sig+ zur Signalmessung mit zwei Dehnungsmesstreifen DMS_a, DMS_b. Im Rahmen der Erfindung bezeichnet symmetrisch eine identische Leitungsstruktur oder eine spiegelverkehrte Leitungsstruktur. In Figur 6 ist die erste Brückenleitung b3, b4, die den Brückenpunkt Sig+ mit dem ersten Dehnungsmessstreifen DMS_b verbindet und die zweite Brückenleitung a3, a4, die den Brückenpunkt Sig+ mit dem zweiten Dehnungsmessstreifen DMS_a verbindet, spiegelsymmetrisch um eine vertikale Achse, die durch den Brückenpunkt Sig+ verläuft, angeordnet.

## Patentansprüche

1. Dehnungsmessstreifenfolie (1) bestehend aus einem Folienmaterial mit mindestens zwei Dehnungsmessstreifen (DMS_a, DMS_b, DMS_c, DMS_d), die zu einer Wheatstone'sche Messbrücke verschaltet sind, wobei die Dehnungsmessstreifenfolie (1) einen Kontaktbereich mit Kontaktpunkten (V+, V-, Sig+, Sig-) umfasst, wobei die Dehnungsmessstreifenfolie (1) Kontaktleitungen umfasst, die die Kontaktpunkte (V+, V-, Sig+, Sig-) mit Brückenpunkten (K1, K2, K3, K4) einer Messbrücke verbinden, wobei die Dehnungsmessstreifenfolie (1) mindestens zwei Brückenleitungen umfasst, die jeweils einen Brückenpunkt (K1, K2, K3, K4) mit einem Dehnungsmessstreifen (DMS_a, DMS_b, DMS_c, DMS_d) verbinden, **dadurch gekennzeichnet dass** jede der mindestens zwei Brückenleitungen einen Leitungsabschnitt mit einem schmalen Leitungsquerschnitt und einen Leitungsabschnitt mit einem breiten Leitungsquerschnitt umfasst und mindestens eine Brückenleitung mindestens einen Umkehrpunkt (6) aufweist, der in einem Leitungsabschnitt mit einem breiten Leitungsquerschnitt ausgebildet ist und an dem sich die Richtung der Leitung um 180 Grad ändert und dass die Kontur des Umkehrpunktes (6) im Wesentlichen rund ist.

2. Dehnungsmessstreifenfolie (1) nach Anspruch 1, **dadurch gekennzeichnet dass** der Umkehrpunkt (6) halbkreisförmig oder elliptisch ausgebildet ist.

3. Dehnungsmessstreifenfolie (1) nach Anspruch 1 oder 2, **dadurch gekennzeichnet dass** mindestens eine Brückenleitung aus drei parallel angeordneten Teilstücken (61, 62, 63) besteht, wobei das mittlere Teilstück (62) an einem Ende über einen ersten Umkehrpunkt (6) mit dem ersten Teilstück (61) verbunden ist und am anderen Ende über einen zweiten Umkehrpunkt (6) mit dem dritten Teilstück (63) verbunden ist.

4. Dehnungsmessstreifenfolie nach Anspruch 3, **dadurch gekennzeichnet dass** der Abstand (s1) zwischen dem mittleren Teilstück (62) und dem ersten Teilstück (61) gleich ist wie der Abstand (s2) zwischen dem mittleren Teilstück (62) und dem dritten Teilstück (63).

5. Dehnungsmessstreifenfolie nach einem der Ansprüche 1 bis 4, **dadurch gekennzeichnet dass** zwei Brückenleitungen die den gleichen Brückenpunkt zur Signalmessung (K3, K4) mit jeweils einem Dehnungsmesstreifen (DMS_a, DMS_b, DMS_c, DMS_d) verbinden symmetrisch ausgebildet sind.

6. Dehnungsmessstreifenfolie nach Anspruch 5, **dadurch gekennzeichnet dass** alle Brückenleitungen die Dehnungsmesstreifen (DMS_a, DMS_b, DMS_c, DMS_d) mit Brückenpunkten zur Signalmessung (K3, K4) verbinden symmetrisch ausgebildet sind.

7. Dehnungsmessstreifenfolie nach einem der Ansprüche 1 bis 6, **dadurch gekennzeichnet dass** mindestens zwei Brückenleitungen jeweils mindestens zwei Leitungsabschnitte (a1, a2, a3, a4, b1, b2, b3, b4, c1, c2, c3, c4, d1, d2, d3, d4) umfassen, wobei die Leitungsabschnitte (a1, a2, a3, a4, b1, b2, b3, b4, c1, c2, c3, c4, d1, d2, d3, d4) der mindestens zwei Brückenleitungen im Wesentlichen jeweils die gleiche Länge (L1, L2) und den gleichen Querschnitt (q1, q2)aufweisen.

8. Dehnungsmessstreifenfolie nach einem der Ansprüche 1 bis 7, **dadurch gekennzeichnet dass** alle Brückenleitungen, die jeweils einen Brückenpunkt mit einem Dehnungsmessstreifen verbinden aus Leitungsabschnitten von im Wesentlichen gleicher Länge und gleichen Querschnitts bestehen.

9. Dehnungsmessstreifenfolie nach einem der Ansprüche 1 bis 8, **dadurch gekennzeichnet dass** Brückenleitungen und Kontaktleitungen im Bereich der Dehnungsmessstreifen aus Leitungsabschnitten mit schmalem Querschnitt gebildet sind.

10. Dehnungsmessstreifenfolie nach einem der Ansprüche 1 bis 9, **dadurch gekennzeichnet dass** die Gleichheit der Länge und des Querschnitts von Leitungsabschnitten mit schmalem Querschnitt eine geringere Toleranz aufweist als die Gleichheit der Länge und des Querschnitts von Leitungsabschnitten mit breitem Querschnitt.

11. Wägezelle zur Bestimmung einer Gewichtskraft, **dadurch gekennzeichnet dass** sie eine Dehnungsmessstreifenfolie (1) nach einem der Ansprüche 1 bis 10 umfasst, wobei die Dehnungsmessstreifen der Dehnungsmessstreifenfolie (1) im Bereich von Schwächungszonen der Wägezelle liegen.

12. Wägezelle zur Bestimmung einer Gewichtskraft nach Anspruch 11, **dadurch gekennzeichnet dass** Brückenleitungen und Kontaktleitungen im Bereich der Schwächungszonen der Wägezelle aus Leitungsabschnitten (4) mit schmalem Querschnitt (q2) ausgebildet sind.

13. Wägezelle zur Bestimmung einer Gewichtskraft nach Anspruch 11 oder 12, **dadurch gekennzeichnet dass** die Dehnungsmessstreifenfolie (1) auf der Oberseite der Wägezelle aufgebracht ist und/oder auf der Unterseite der Wägezelle aufgebracht ist.

14. Waage, **dadurch gekennzeichnet dass** die Waage eine Wägezelle nach einem der Ansprüche 11 bis 13 umfasst und/oder mindestens einen Dehnungsmessstreifen nach einem der Ansprüche 1 bis 10.

## Claims

1. Strain gauge film (1) made of a film material with at least two strain gauges (DMS_a, DMS_b, DMS_c, DMS_d), which are wired to form a measuring bridge, wherein the strain gauge film (1) comprises a contact region with contact points (V+, V-, Sig+, Sig-), wherein the strain gauge film (1) comprises contact lines which connect the contact points (V+, V-, Sig+, Sig-) to bridge points (K1, K2, K3, K4) of a measuring bridge, wherein the strain gauge film (1) comprises at least two bridge lines, which each connect a bridge point (K1, K2, K3, K4) to a strain gauge (DMS_a, DMS_b, DMS_c, DMS_d),
**characterized in that** each of the at least two bridge lines comprises a line section with a narrow line cross section and a line section with a wide line cross section, and at least one bridge line has at least one reversal point (6), which is formed in a line section with a wide line cross section and at which the direction of the line changes by 180 degrees, and **in that** the contour of the reversal point (6) is substantially round.

2. Strain gauge film (1) according to Claim 1, **characterized in that** the reversal point (6) is semicircular or elliptical.

3. Strain gauge film (1) according to Claim 1 or 2, **characterized in that** at least one bridge line consists of three portions (61, 62, 63) arranged in parallel, wherein the central portion (62) is connected to the first portion (61) at one end via a first reversal point (6), and is connected to the third portion (63) at the other end via a second reversal point (6).

4. Strain gauge film according to Claim 3, **characterized in that** the distance (s1) between the central portion (62) and the first portion (61) is identical to the distance (s2) between the central portion (62) and the third portion (63).

5. Strain gauge film according to one of Claims 1 to 4, **characterized in that** two bridge lines which connect the same bridge point for signal measurement (K3, K4) to respectively one strain gauge (DMS_a, DMS_b, DMS_c, DMS_d) are formed symmetrically.

6. Strain gauge film according to Claim 5, **characterized in that** all the bridge lines which connect strain gauges (DMS_a, DMS_b, DMS_c, DMS_d) to bridge points for signal measurement (K3, K4) are formed symmetrically.

7. Strain gauge film according to one of Claims 1 to 6, **characterized in that** at least two bridge lines each comprise at least two line sections (a1, a2, a3, a4, b1, b2, b3, b4, c1, c2, c3, c4, d1, d2, d3, d4), wherein the line sections (a1, a2, a3, a4, b1, b2, b3, b4, c1, c2, c3, c4, d1, d2, d3, d4) of the at least two bridge lines each have substantially the same length (L1, L2) and the same cross section (q1, q2).

8. Strain gauge film according to one of Claims 1 to 7, **characterized in that** all the bridge lines which each connect a bridge point to a strain gauge consist of line sections of substantially identical length and identical cross section.

9. Strain gauge film according to one of Claims 1 to 8, **characterized in that** bridge lines and contact lines in the region of the strain gauges are formed from line sections with a narrow cross section.

10. Strain gauge film according to one of Claims 1 to 9, **characterized in that** the equality of the length and of the cross section of line sections with a narrow cross section has a lower tolerance than the equality of the length and of the cross section of line sections with a wide cross section.

11. Load cell for determining a weight, **characterized in that** it comprises a strain gauge film (1) according to one of Claims 1 to 10, wherein the strain gauges of the strain gauge film (1) are located in the region of weakening zones of the load cell.

12. Load cell for determining a weight according to Claim 11, **characterized in that** the bridge lines and contact lines in the region of the weakening zones of the load cell are formed from line sections (4) with a narrow cross section (q2).

13. Load cell for determining a weight according to Claim 11 or 12, **characterized in that** the strain gauge film (1) is applied to the upper side of the load cell and/or to the underside of the load cell.

14. Scale, **characterized in that** the scale comprises a load cell according to one of Claims 11 to 13 and/or at least one strain gauge according to one of Claims 1 to 10.

## Revendications

1. Film à jauges de contrainte (1) comprenant un film de matériau pourvu d'au moins deux jauges de contrainte (DMS_a, DMS_b, DMS_c, DMS_d), montées en pont de Wheatstone, le film à jauges de contrainte (1) comprenant une zone de contact pourvue de points de contact (V+, V-, Sig+, Sig-), le film à jauges de contrainte (1) comprenant des lignes de contact qui relient les points de contact (V+, V-, Sig+, Sig-) à des points (K1, K2, K3, K4) d'un pont de mesure, le film à jauges de contrainte (1) comprenant au moins deux lignes de pont qui relient chacune un point de pont (K1, K2, K3, K4) à une jauge de contrainte (DMS_a, DMS_b, DMS_c, DMS_d), **caractérisé en ce que** chacune des au moins deux lignes de pont comprend une portion de ligne ayant une section transversale étroite et une portion de ligne ayant une section transversale large et au moins une ligne de pont comporte au moins un point de rebroussement (6) qui est formé dans une portion de ligne ayant une section transversale large et au niveau duquel la direction de la ligne change de 180 degrés et **en ce que** le contour du point de rebroussement (6) est sensiblement rond.

2. Film à jauges de contrainte (1) selon la revendication 1, **caractérisé en ce que** le point de rebroussement (6) est semi-circulaire ou elliptique.

3. Film à jauges de contrainte (1) selon la revendication 1 ou 2, **caractérisé en ce qu'**au moins une ligne de pont comprend trois pièces parallèles (61, 62, 63),
la pièce médiane (62) étant reliée, à une extrémité, à la première pièce (61) par le biais d'un premier point de rebroussement (6) et, à l'autre extrémité, à la troisième pièce (63) par le biais d'un deuxième point de rebroussement (6).

4. Film à jauges de contrainte selon la revendication 3, **caractérisé en ce que** la distance (s1) entre la partie médiane (62) et la première partie (61) est égale à la distance (s2) entre la partie médiane (62) et la troisième partie (63).

5. Film à jauges de contrainte selon l'une des revendications 1 à 4, **caractérisé en ce que** deux lignes de pontage relient chacune le même point de pont destiné à la mesure de signal (K3, K4) à une jauge de contrainte (DMS_a, DMS_b, DMS_c, DMS_d) et sont formées de manière symétrique.

6. Film à jauges de contrainte selon la revendication 5, **caractérisé en ce que** toutes les lignes de pont relient les jauges de contrainte (DMS_a, DMS_b, DMS_c, DMS_d) à des points de pont destinés à la mesure de signal (K3, K4) et sont formées de manière symétrique.

7. Film à jauges de contrainte selon l'une des revendications 1 à 6, **caractérisé en ce qu'**au moins deux lignes de pont comportent chacune au moins deux portions de ligne (a1, a2, a3, a4, b1, b2, b3, b4, c1, c2, c4, c4, d1, d2, d3 , d4), les portions de ligne (a1, a2, a3, a4, b1, b2, b3, b4, c1, c2, c3, c4, d1, d2, d3, d4) d'au moins deux lignes de pont ayant chacune sensiblement la même longueur (L1, L2) et la même section transversale (q1, q2).

8. Film à jauges de contrainte selon l'une des revendications 1 à 7, **caractérisé en ce que** toutes les lignes de pont, qui relient chacune un point de pont à une jauge de contrainte, comprennent des portions de ligne sensiblement de même longueur et de même section transversale.

9. Film à jauges de contrainte selon l'une des revendications 1 à 8, **caractérisé en ce que** des lignes de pont et des lignes de contact sont formées dans la région des jauges de contrainte comprenant des portions de ligne de section transversale étroite.

10. Film à jauges de contrainte selon l'une des revendications 1 à 9, **caractérisé en ce que** l'égalité de la longueur et de la section transversale de portions de ligne ayant une section transversale étroite présente une plus faible tolérance que l'égalité de la longueur et de la section transversale de portions de ligne ayant une section transversale large.

11. Cellule de pesée destinée à déterminer un poids, **caractérisée en ce qu'**elle comprend un film à jauges de contrainte (1) selon l'une des revendications 1 à 10, les jauges de contrainte du film à jauges de contrainte (1) étant situées dans la région de zones d'affaiblissement de la cellule de pesée.

12. Cellule de pesée destinée à déterminer un poids selon la revendication 11, **caractérisée en ce que** des lignes de pont et des lignes de contact sont formées, dans la région des zones d'affaiblissement de la cellule de pesée, de portions de ligne (4) ayant une section transversale étroite (q2).

13. Cellule de pesée destinée à déterminer un poids selon la revendication 11 ou 12, **caractérisée en ce que** le film à jauges de contrainte (1) est appliqué sur le côté supérieur de la cellule de pesée et/ou est appliqué sur le côté inférieur de la cellule de pesée.

14. Balance, **caractérisée en ce que** la balance comprend une cellule de pesée selon l'une des revendications 11 à 13 et/ou au moins une jauge de contrainte selon l'une des revendications 1 à 10.
